# EUROPEAN PATENT SPECIFICATION

(11) **EP 2 837 836 B1**
(45) Date of publication and mention of the grant of the patent: **07.12.2016**
(21) Application number: 14180451.8
(22) Date of filing: 10.08.2014
(51) Int. Cl.: F16B 21/08, E05B 3/06

(54) **A method for mutual coupling of objects by means of a clip with radial tolerance**
Verfahren zur gegenseitigen Kopplung von Objekten mittels eines Clips mit radialen Toleranz
Procédé pour le couplage mutuel des objets au moyen d'un clip avec une tolérance radiale

(30) Priority: 12.08.2013 NL 2011293
(43) Date of publication of application: 18.02.2015
(73) Proprietor: Artitec B.V., 3734 GE Den Dolder (NL)
(72) Inventor: Delfortrie, Maarten Jan Olof, 3734 GE Den Dolder (NL)
(74) Representative: Plaggenborg, Menko Bernard

(56) References cited:
- CH-A- 445 800
- GB-A- 2 077 845
- US-B1- 6 351 380

## Description

The present invention relates to a method according to the preamble of claim 1. The invention also relates to a finishing element to be connected to a surface by means of this method.

Such a method is known in the art. For example, tree clips are used for mutually coupling two objects, a rod-shaped element of a first object being provided with a rigidly connected tree clip after which the rod-shaped element with said tree clip is introduced in an opening of the second object. The rod-shaped element and said opening require an accurate positioning.

Swiss patent publication CH 445 800 describes a clamp for mutually two objects, wherein said clamp comprises a axial recess in which a shank of a screw coupled to a first object is received so as to couple said clamp to said first object. Said shank tightly fits against the inner surface of said clamp. Said clamp is embodied to be received inside an opening of another object. Flexible legs at an outer surface of said shank ensure a tight fitting inside said opening. Due to the shape of these legs such clamps are often called "tree clips".

US patent 6351380 describes a clamp that is substantially identical to said Swiss clamp. A rod-shaped element that is connected to a first object tightly fits inside a recess of a clamp.

British patent publication GB 2077845 describes a solid clamp comprising a shank with flexible legs and a head connected to said shank, embodied for clamping thin objects between said head and another object.

Methods using such clamp are only applied limitedly in practice. A disadvantage of these known tree clips is that both objects are prone to a limited tolerance, induced by said legs and the tight connection method of said clamp and said rod-shaped element.

The present invention aims at providing an improved method of the kind mentioned in the preamble.

The invention especially aims at providing a method as mentioned in the preamble for connecting objects that do not both comprise an opening.

The invention also aims at providing a method for mutually clamping of coupling two objects and wherein the opening of a first object and the rod-shaped element of the second object do not need to be aligned exactly with respect to each other, nevertheless providing a very strong coupling.

The invention also aims at providing a method wherein no axial clearance is obtained but wherein a slight radial clearance is retained.

Furthermore, the invention aims at providing an improved method wherein one of said objects is retained at a fixed position with respect to the clamp and the other object has a tolerance with respect to said clamp.

So as to reach at least one of the above mentioned goals, according to a first embodiment the present invention provides a method comprising the features according to claim 1. This method provides the advantage that only one of said objects requires an opening and that nevertheless a firm and stable mutual coupling with a wide radial tolerance is obtained.

It has also shown that the clamp provides a very fast coupling that cannot be obtained when using methods and parts that are at present available. Such synergetic result is completely unexpected.

According to a preferred embodiment said coupling member comprises a nut to be screwed on thread provided on said rod-shaped element, for mutually coupling said clamp and said second object. This ensures at all times a secure connection of said clamp against said second object. As a consequence, the clamp cannot be slid from said rod-shaped element. By clamping said clamp by means of the nut tightly against said second object, any axial clearance between the clamp and the second object is effectively prevented. As a consequence, any axial clearance between said both objects is effectively prevented as well. Even a relatively large free space between the rod-shaped element and the inside of said clamp will provide a tight mutual coupling of said both objects. This is a great advantage with respect to known clamps that are applied for such reason. A combination of radial clearance and completely preventing any axial clearance cannot be obtained with the known clamps. So as to be able to receive a large variety of rod-shaped elements, it is preferred that the recess has a cylindrical shape.

It therefore is especially preferred for the recess to be embodied for receiving said rod-shaped element in a non-clamping fashion. By positioning said clamp loosely around said rod-shaped element a radial clearance is obtained that enables one to apply the present method and clamp, even when a first object with two or more openings and a second object with two or more rod-shaped elements are mutually coupled and wherein said openings and rod-shaped elements are not exactly aligned. Said radial clearance enables a tight coupling.

It has shown that an improved close fitting of said rod-shaped element within said recess is obtained when said clamp comprises flexible projections projecting from an inner surface of said recess for freely or fittingly receiving said rod-shaped element within said recess. This ensure an improved connection of the clamp to the rod-shaped element until the nut is arranged. A non-accurate alignment of opening and rod-shaped element will induce deformation or deflection of the projections provided at the inside. Hence, the radial clearance is retained so as to be able to mutual connect non-accurately aligned objects.

So as to enable the present method for use with a large variety of openings, wherein a proper clamping is ensured, for example openings with different diameters and cylindrical openings or otherwise shaped openings, it is preferred that the flexible material part provided at an outer surface of said body is made up of a multitude of flexible legs, projecting from said body.

An effective clamping action is obtained when each leg extends over part of the outer circumference of said body, preferably over maximally 120°, more preferably over maximally 90°. Then, it is especially preferred that the legs are positioned substantially transversally or at an angle of maximally 45°, preferably maximally 15°, more preferably maximally 10°, still more preferably maximally 5° with respect thereto.

When the legs are positioned radially symmetrical around said body, in unloaded state, a central positioning of said clamp within said opening is obtained. This means that the recess in said clamp is positioned substantially centrally in the object's opening. When a rod-shaped element of another object is received in said recess, the clamp may move radially in said opening due to the flexibility of said legs. By configuring the clamp's outer diameter somewhat larger than the inner diameter of said opening, the clamp will be received clampingly in said opening. As mentioned before, the recess' diameter will be somewhat larger than the outer diameter of said rod-shaped element, such that said rid-shaped element is received within the recess in a non-clamping fashion. A radial movement of said second object with respect to said first object remains allowable. Naturally, this result is obtained with any kind of flexible material part at an outer surface of the clamp's body, not just when applying said flexible legs.

So as to obtain a very effective clamping action, it is preferred for said clamp to comprise in the longitudinal direction at least two, preferably at least three, more preferably at least four legs, projecting from said body.

According to an alternative embodiment the flexible material part provided at an outer surface of said body comprises a compressible material. Said flexible material part provided at an outer surface of said body may especially be comprised of a foam material.

According to a further aspect, the invention also relates to a finishing element, for example a rosette, for positioning on a door or the like, comprising a rod-shaped element provided with a clamp for use in a method according to the invention.

A further implementation of the invention resides in a method for clampingly positioning a finishing element, for example a rosette, on a door, comprising the steps of:
[a] providing a door with openings,
[b] providing a finishing element comprising two rod-shaped elements projecting therefrom, and
[c] positioning a clamp according to the invention around each rod-shaped element and positioning said finishing element against the door, such that said clamps each are received clampingly within said openings in said door.

An additional optional step may be comprised of containing said clamp around the rod-shaped element so as to fixedly couple said clamp to said second object. For example, the rod-shaped element may comprise a thread wherein said clamp is positioned around said rod-shaped element and secured thereto by means of a nut. The clamp will not be coupled to the rod-shaped element by means of said thread. By positioning said rod-shaped element by means of said clamp in a clamping fashion in an opening, both objects are securely mutually coupled. The nut's outer diameter should be smaller than the opening's inner diameter.

Hereafter, the invention will be described with reference to a drawing. The drawing shows in:
Fig. 1 a schematic view of an application of a clamp according to the invention,
Fig. 2 a sectional view of a clamp for use in the present invention,
Fig. 3 a top view of a clamp for use in the present invention, and
Fig. 4 a perspective view of a clamp for use in the present invention.

In the figures, the same parts are referred to by the same reference numbers. However, for ease of understanding the figures, not all elements that are required for a practical embodiment have been shown.

Hereinafter, the rod-shaped element will also be referred to as "coupling element" or rod-shaped coupling element".

The invention will be described with reference to a clamp for use in the method according to the invention. More in particular, the clamp is described in combination with a rosette to be connected to a door. The invention is not limited to such use. For example and without any limitation, the invention is directed to cover plates that are to be connected to a surface.

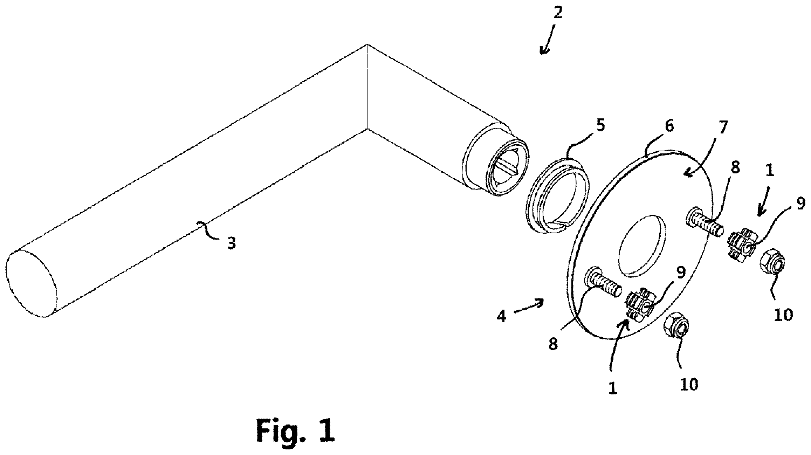

Fig. 1 shows a schematic view of a clamp 1 according to the invention, used in a door handle 2 for a door (not shown). Door handle 2 comprises a lever 3, a rosette 4 and a sleeve bearing 5 positioned between said rosette 4 and lever 3. Furthermore, a cover plate 6 is shown, being part of rosette 4, a surface 7 thereof to be positioned against said door. A door usually is provided with openings in which screws are to be received for coupling said rosette against said door. In the embodiment as shown in Fig. 1 said rosette 4, more in particular the cover plate 6, is provided with rod-shaped coupling elements 8 that protrude from said surface 7, each of them to be received in an opening of said door. These elements 8 may form a fixed relationship with said rosette 4 or said cover plate 6. Each clamp comprises a recess 9 for receiving said element 8. For example, the elements 8 may be threaded such that a nut 10 can be used for coupling said clamp 1 onto element 8, preferably tightly positioned against said cover plate. The recess 9 may be embodied such that element 8 fits tightly within it, such that nut 10 may be cancelled. Also, an adhesive may be applied for coupling clamp 1 with said element 8.

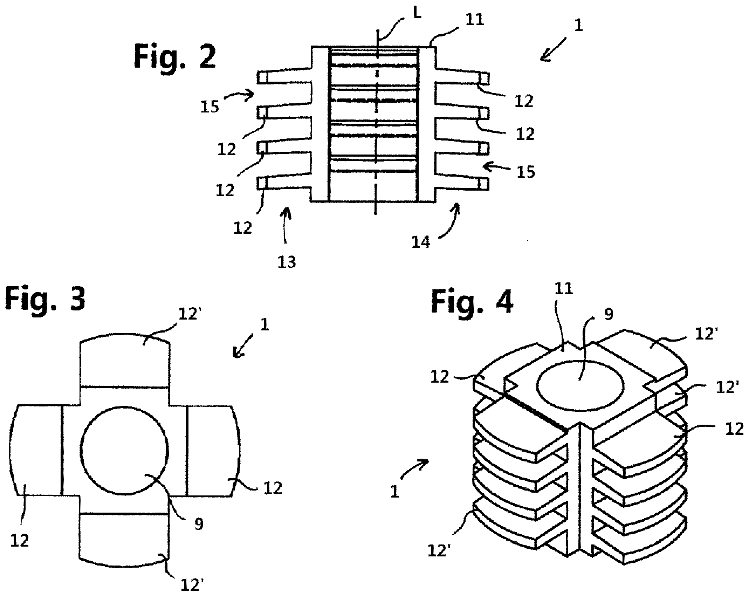

Fig. 2 shows a sectional view of said 1 along a longitudinal axis L of clamp 1. Said clamp 1 is substantially shaped as a body 11 comprising legs 12 that protrude from an outer side of said body. Said legs are flexible, such that they may deflect or deform when clamp 1 is received in an opening the inner diameter of which is smaller than the outside diameter of said clamp 1. Clamp 1 has a central, longitudinal recess 9, as shown further in Fig. 3 and Fig. 4. In said recess 9 a coupling element 8 may be received, as described with reference to Fig. 1.

In Fig. 3 a top view of clamp 1 is shown, the opening 9 and the legs 12 being visible clearly.

Finally, Fig. 4 shows a perspective view of clamp 1. In the embodiment as shown in Fig. 4 it is clear that clamp 1 comprises four sets of legs 12, 12', symmetrically distributed about the circumference of body 11 of said clamp. These sets of legs 12, 12' are distributed along the circumference of body 11, such that the height varies along the circumference thereof. Opposite legs 12; 12' are positioned symmetrically with respect to each other, which is also shown in Fig. 2. The legs 12 of each set, as visible in Fig. 2, showing opposite sets 13 and 14, are positioned mutually spaced apart, providing a gap 15 between two consecutive legs 12. Such provides these legs 12 the possibility of deformation or deflection, as mentioned above. Legs 12' are positioned in a staggered relationship with respect to legs 12, substantially at a position of a gap 15 between the sets of legs 12.

The invention is not limited to the embodiment as mentioned and described hereinbefore and to the embodiment as shown in the drawing. The invention is limited only by the appending claims. For example, legs 12, 12' may be provided at the same height, instead of in a staggered relationship. The legs may be positioned transversally with respect to said body 11 or at an angle thereof. Instead of legs 12, 12' that are positioned in a cross shape, as shown in the drawing, other shapes of legs 12, 12' or other configurations of legs 12, 12' may be applied. Also, other number of sets of legs may be applied, for example two, three, five, six or even more sets. Instead of four legs 12, 12' per set, other numbers per set of legs 12, 12' may be provided. Optionally, a single set of legs may be applied, wherein each leg is configured as a continuous, circumferential flexible plane, protruding from said body 11.

For example, clamp 1 may also be embodied integrated with cover plate 6, wherein said clamp is fixedly connected to cover plate 6. This also provides an advantage in that cover plate 6 does not need an opening for coupling said rosette to a door or a wall.

Clamp 1 may be manufactured from any suitable flexible material wherein, when inserting said clamp in an opening, a sufficient clamping action is obtained, such that said clamp 1 and said element that is inserted in recess 9 cannot be removed easily from said opening. A relatively rigid material may suitably be used for openings with a relatively rough inner surface, like wood and chipboard, whereas a softer material that has a high coefficient of friction, like polyurethane or the like, may suitably be used for openings having a relatively smooth surface, like plastics and metals. However, the choice of material is not limited to these examples and properties.

The clamp according to the present invention may be used for mutually coupling other objects than a rosette and a door, for example cover plates may be coupled to other objects, for example but not exclusively doors.

The clamp according to the present invention may suitably be used for mutually coupling objects, but is not limited to such use. Any other use is also covered within the protective scope of the present document.

The invention also covers every combination of features that were mentioned above independently.

## Claims

1. A method for mutually coupling a first object comprising an opening and a second object (4) comprising a rod-shaped element (8), comprising the steps of: - providing a clamp (1) comprising a body (11) with a axial longitudinal axis (L) and a flexible material part (12) at an outer surface of said body (11), said clamp (1) comprising a recess (9) axially through said body (11); - receiving said rod-shaped element (8) in said recess (9) and positioning said clamp (1) in said opening of said first object, such that said flexible material part (12) is positioned substantially abutting a surface of the opening in said first object, wherein_ said rod-shaped element (8) is at least partially fed through said recess (9) and positioned outside said clamp (1) and in that a coupling member (10) is coupled onto said protruding part of said rod-shaped element (8) for keeping said clamp (1) positioned against said second object, **characterized in that** the inner diameter of said clamp (1) is larger than the outer diameter of said rod-shaped element (8).

2. A method according to claim 1, said coupling member (10) comprising a nut (10) to be screwed on thread provided on said rod-shaped element (8), for mutually coupling said clamp (1) and said second object (4).

3. A method according to claim 1 or 2, said recess (9) being embodied for receiving said rod-shaped element (8) in a non-clamping fashion.

4. A method according to claim 1, 2 or 3, said clamp (1) comprising flexible projections projecting from an inner surface of said recess (9) for freely or fittingly receiving said rod-shaped element (8) within said recess.

5. A method according to claim 1, said flexible material part (12) provided at an outside of said body (11) being made up of a multitude of flexible legs (12) projecting from said body (11).

6. A method according to claim 5, each leg (12) extending over part of the outer circumference of said body (11), preferably over maximally 120°, more preferably over maximally 90°.

7. A method according to any of the preceding claims 5 and 6, said legs (12) being positioned substantially transversally or at an angle of maximally 45°, preferably maximally 15°, more preferably maximally 10°, still more preferably maximally 5° with respect thereto.

8. A method according to any of claims 5 - 7, said legs (12) being positioned radially symmetrical (13, 14) around said body (11).

9. A method according to any of claims 5 - 7, said clamp (1) comprising in the longitudinal direction at least two, preferably at least three, more preferably at least four legs (12), projecting from said body (11).

10. A method according to claim 1, said flexible material part (12) provided at an outer surface of said body (11), comprising a compressible material.

11. A method according to claim 10, said flexible material part (12) provided at an outer surface of said body (11), comprising a foam material.

12. A finishing element (4), for example a rosette (4), for positioning on a door, comprising a rod-shaped element (8) provided with a clamp (1) for use in a method according to any of the preceding claims.

## Patentansprüche

1. Verfahren zum gegenseiteigen Kuppeln eines ersten Gegenstands, der eine Öffnung umfasst, und eines zweiten Gegenstands (4), der ein stabförmiges Element (8) umfasst, welches die Schritte umfasst:
Bereitstellen einer Klammer (1), die einen Körper (11) mit einer axial verlaufenden Längsachse (L) und einem Teil aus flexiblem Material (12) an einer äußeren Oberfläche des Körpers (I1) aufweist, worin die Klammer (1) eine Vertiefung (9) aufweist, die axial durch den Körper (11) verläuft;
Aufnehmen des stabförmigen Elements (8) in der Vertiefung (9) und Positionieren der Klammer (1) in der Öffnung des ersten Gegenstand, so dass das Teil aus flexiblem Material (12) derart positioniert ist, dass es derart positioniert ist, dass es im Wesentlichen auf einer Oberfläche der Öffnung in dem ersten Gegenstand aufliegt, worin
das stabförmige Element (8) mindestens teilweise durch die Vertiefung (9) geschoben und ausserhalb der Klammer (1) positioniert ist, und dass ein Kupplungs-Element (10) auf den vorstehenden Teil des stabförmigen Elements (8) gekoppelt ist, um die Klammer (1) gegen den zweiten Gegenstand positioniert zu halten, **dadurch gekennzeichnet, dass**
der Innendurchmesser der Klammer (1) größer ist als der Außendurchmesser des stabförmigen Elements (8).

2. Verfahren nach Anspruch 1, worin das Kupplungs-Element (10) eine Nut (10) umfasst, die auf ein Gewinde geschraubt wird, das auf dem stabförmigen Element (8) bereit gestellt ist, um die Klammer (1) und den zweiten Gegenstand (4) gegenseitig zu koppeln.

3. Verfahren nach Anspruch 1 oder 2, worin die Vertiefung (9) zur Aufnahme des stabförmigen Elements (8) in einer nicht klammernden Art und Weise ausgestaltet ist.

4. Verfahren nach Anspruch 1, 2 oder 3, worin die Klammer (1) flexible Vorsprünge umfasst, die von einer inneren Oberfläche der Vertiefung (9) vorstehen, um das stabförmige Element (8) in der Vertiefung frei und passend aufzunehmen.

5. Verfahren nach Anspruch 1, worin das Teil aus flexiblem Material (12), das auf einer Außenseite des Körper (11) vorgesehen ist, aus mehreren flexiblen Beinen (12) besteht, die von dem Körper (11) vorstehen.

6. Verfahren nach Anspruch 5, worin sich jedes Bein (12) über einen Teil des äußeren Umfangs des Körpers (11) erstreckt, vorzugsweise über maximal 120°, mehr bevorzugt über maximal 90°.

7. Verfahren nach einem der vorstehenden Ansprüche 5 und 6, worin die Beine (12) im Wesentlichen transversal oder in einem Winkel von maximal 45°, vorzugsweise maximal 15°, mehr bevorzugt maximal 10°, noch mehr bevorzugt maximal 5° dazu positioniert sind.

8. Verfahren nach einem der Ansprüche 5 - 7, worin die Beine (12) radial symmetrisch (13, 14) um den Körper (11) positioniert sind.

9. Verfahren nach einem der Ansprüche 5 - 7, worin die Klammer (1) in der Längsrichtung mindestens zwei, vorzugsweise mindestens drei, mehr bevorzugt mindestens vier Beine (12) umfasst, die vom Körper (11) vorstehen.

10. Verfahren nach Anspruch 1, worin das Teil aus flexiblem Material (12), das an der äußeren Oberfläche des Körpers (11) vorgesehen ist, ein komprimierbares Material umfasst.

11. Verfahren nach Anspruch 10, worin das Teil aus flexiblem Material (12), das an der äußeren Oberfläche des Körpers (11) vorgesehen ist, ein Schaum-Material umfasst

12. Veredelungselement (4), beispielsweise a Rosette (4), zur Positionierung auf einer Tür, welches ein stabförmiges Element (8) umfasst, das mit einer Klammer (1) versehen ist, zur Verwendung in einem Verfahren nach einem der vorstehenden Ansprüche.

## Revendications

1. Procédé de couplage mutuel d'un premier objet comprenant une ouverture et d'un second objet (4) comprenant un élément en forme de tige (8), comprenant les étapes : - de fourniture d'une fixation (1) comprenant un corps (11) avec un axe longitudinal axial (L) et une partie de matériau flexible (12) au niveau d'une surface externe dudit corps (11), ladite fixation (1) comprenant un évidement (9) axialement au travers dudit corps (11) ; - de réception dudit élément en forme de tige (8) dans ledit évidement (9) et de positionnement de ladite fixation (1) dans ladite ouverture dudit premier objet, de sorte que ladite partie de matériau flexible (12) est positionnée sensiblement en butée contre une surface de l'ouverture dans ledit premier objet, dans lequel ledit élément en forme de tige (8) est au moins partiellement introduit à travers ledit évidement (9) et positionné à l'extérieur de ladite fixation (1) et un organe de couplage (10) est couplé sur ladite partie saillante dudit élément en forme de tige (8) pour maintenir ladite fixation (1) en position contre ledit second objet, **caractérisé en ce que** le diamètre interne de ladite fixation (1) est plus grand que le diamètre externe dudit élément en forme de tige (8).

2. Procédé selon la revendication 1, ledit organe de couplage (10) comprenant un écrou (10) devant être vissé sur un filetage prévu sur ledit élément en forme de tige (8), pour un couplage mutuel de ladite fixation (1) et dudit second objet (4).

3. Procédé selon la revendication 1 ou 2, ledit évidement (9) étant incorporé pour recevoir ledit élément en forme de tige (8) de façon non fixée.

4. Procédé selon la revendication 1, 2 ou 3, ladite fixation (1) comprenant des saillies flexibles faisant saillie à partir d'une surface interne dudit évidement (9) pour recevoir librement ou par ajustement ledit élément en forme de tige (8) à l'intérieur dudit évidement.

5. Procédé selon la revendication 1, ladite partie en matériau flexible (12) prévue sur un extérieur dudit corps (11) étant constituée d'une multitude de pattes flexibles (12) qui font saillie à partir dudit corps (11).

6. Procédé selon la revendication 5, chaque patte (12) s'étendant sur une partie de la circonférence externe dudit corps (11), de préférence sur 120° maximum, de manière davantage préférée sur 90° maximum.

7. Procédé selon l'une quelconque des revendications 5 et 6 précédentes, lesdites pattes (12) étant positionnées sensiblement transversalement ou à un angle de 45° maximum, de préférence de 15° maximum, de manière davantage préférée de 10° maximum, de manière encore davantage préférée de 5° maximum par rapport à celles-ci.

8. Procédé selon l'une quelconque des revendications 5 à 7, lesdites pattes (12) étant positionnées radialement symétriquement (13, 14) autour dudit corps (11).

9. Procédé selon l'une quelconque des revendications 5 à 7, ladite fixation (1) comprenant dans la direction longitudinale au moins deux, de préférence au moins trois, de manière davantage préférée au moins quatre pattes (12), faisant saillie à partir dudit corps (11).

10. Procédé selon la revendication 1, ladite partie de matériau flexible (12) prévue sur une surface externe dudit corps (11) comprenant un matériau compressible.

11. Procédé selon la revendication 10, ladite partie de matériau flexible (12) prévue sur une surface externe dudit corps (11) comprenant un matériau alvéolaire.

12. Elément de finition (4), par exemple une rondelle d'écartement (4), pour un positionnement sur une porte, comprenant un élément en forme de tige (8) prévu avec une fixation (1) destinée à être utilisée dans un procédé selon l'une quelconque des revendications précédentes.
